# EUROPEAN PATENT SPECIFICATION

(11) **EP 2 120 526 B1**
(45) Date of publication and mention of the grant of the patent: **21.12.2011**
(21) Application number: 08706113.1
(22) Date of filing: 20.02.2008
(51) Int. Cl.: A01B 45/02, A01B 39/02, A01G 1/12, A01B 11/00, A01B 39/10, A01B 35/14, A01B 39/22

(54) **"AERATOR MECHANISM WITH VERTICALLY RECIPROCATING TINE"**
VERTIKUTIERMECHANISMUS MIT SICH VERTIKAL HIN UND HER BEWEGENDEM ZINKEN
MÉCANISME D'AÉRATEUR AVEC DENT À MOUVEMENT ALTERNATIF VERTICAL

(30) Priority: 22.02.2007 AU 2007900914 P
(43) Date of publication of application: 25.11.2009
(73) Proprietor: Greencare Industries Pty Ltd, Blaxlands Ridge, NSW 2758 (AU)
(72) Inventor: LIVINGSTONE, David, John, Caringbah, NSW 2229 (AU)
(74) Representative: Grosse, Felix Christopher
(86) International application number: PCT/AU2008/000230
(87) International publication number: WO 2008/101292

(56) References cited:
- EP-B1- 0 195 103
- WO-A1-01/47341
- WO-A1-02/94000
- CA-A1- 2 188 457
- US-A- 4 084 642
- US-A- 4 632 189
- US-A1- 2005 006 110

## Description

### Introduction

The present invention relates generally to green keeping equipment and in particular the invention provides an improved reciprocating drive for a turf aeration device.

### Background of the Invention

It is well known that in the cultivation of turf surfaces aeration of the root system is required from time to time to relieve compaction and enable penetration of nutrients beneath the-surface mat of the turf. A variety of mechanisms have been used in the past to achieve this end, all of which generally include tines carried in some type of mechanism that allows periodic spiking of the surface. These mechanisms have increased in sophistication over the years from simple tine rollers comprising a drum with a plurality of tines located pointing radially outwardly from its surface to elaborate reciprocating mechanisms.

For example, WO 2002/094000 A1 discloses a turf aerator with a reciprocating drive mechanism. The drive mechanism comprises a substantially rigid tine leg pivotally mounted at an upper end to a drive assembly arranged to reciprocate the tine leg along its longitudinal axis. The drive assembly is connected to an eccentric, which can be rotated to reciprocate drive member substantially vertically and, hence, to the tine leg.

A basic problem with such tine rollers and, which has been overcome to a certain degree by some more advanced systems is that of tearing which occurs when the tine does not enter and exit the turf vertically but instead passes through an arc while it is in the ground. This action damages the turf surface and makes it less useful for its intended purpose during the period immediately following aeration. It is also highly desirable that turf aerators be able to operate quickly in order to minimise the cost of this operation and enable the operation to be performed more regularly.

It is also desirable that the reciprocating mechanism can be removed from ground engagement while operating at speed without the tines becoming unstable in their motion. Operating prior art machines in this way generally leads to flailing behaviour and can have detrimental effects. Being able to overate the mechanism at speed while disengaged from the ground allows the operator to lift the mechanism while passing over small obstructions such as cups on putting greens and tee markers on tee-off areas, pop-up sprinkler heads, etc, without having to stop or slow the mechanism. It also allows the mechanism to be brought up to operating speed before dropping the tines into ground engagement at start-up and lessens the chance of accidentally moving forward with the tines engaged in the ground and the reciprocating mechanism not operating (which will lead to tine leg damage).

### Summary of the Invention

The present invention provides a turf aerator with a reciprocating drive mechanism comprising:
a substantially rigid tine leg pivotally mounted at an upper end to a drive assembly arranged to reciprocate the tine leg along its longitudinal axis and the tine leg being provided with a cam surface facing the direction in which the aerator travels when in use,
the drive assembly comprising:
   a reciprocating drive member to which the tine leg is pivotally attached at a first point along the drive member, the drive member being pivotally connected at a second point to a frame and at a third point to a first eccentric, the first eccentric being rotated to reciprocate the first point on the drive member substantially vertically; and
   a forward guide arrangement comprising:
      a forward travel-limiting stop acting on the cam surface of the tine leg to limit forward travel of the tine leg when the tine is out of the ground, the cam surface being shaped to compensate for arcuate motion of the first point of the drive member to thereby maintain a substantially straight and axial path of travel of the tine while the tine leg is running against the forward travel-limiting stop.

The present invention also provides method of reciprocating a tine in a turf aerator comprising:
providing a substantially rigid tine leg carrying a substantially axially mounted tine at one end, and a cam surface on the tine leg facing the direction in which the aerator travels when in use:
   driving the tine leg along its longitudinal axis the tine leg being pivotally mounted, at an end opposite the tine, to a drive assembly arranged to reciprocate the tine leg;
   biasing the tine leg towards a forward travel-limiting stop acting on the cam surface of the tine leg to limit forward travel of the tine leg when the tine is out of the ground, the cam surface being shaped to compensate for arcuate motion of the pivotably connected end of the tine leg to thereby maintain a substantially straight and axial path of travel of the tine while the tine leg is running against the forward travel-limiting stop.

The cam surface preferably has a shape which is a function of an arc of travel of the first point of the drive member.

The forward travel-limiting stop may comprise a roller mounted on a spring arm and located forward of the tine leg relative to the normal direction of travel of the aerator to define a forward limit of travel of the tine leg. The spring arm will preferably be semi-rigid as a result of having a high spring rate. In the case where a relatively large diameter roller is used, the shape of the cam surface may be adjusted to allow for the change in point of contact between the cam surface and the forward travel-limiting stop roller over the length of reciprocation of the tine leg

The third point of the reciprocating drive member is preferably located intermediate the first and second points, however this is not essential and, it will be appreciated that the third point can be located in various positions relative to the first and second points.

The lower end of the tine leg is able to move in a rearward direction to allow the tine to move relative to the machine while the tine is in the ground. The tine leg is biased to a forward position such that when the tine leaves the ground, the tine leg returns toward the forward end of its travel ready for re-engagement with the ground. Forward biasing of the tine leg is preferably achieved by a rear guide mechanism including a rear-guide roller mounted on a pivotable arm, located rearward of the tine leg relative to the normal direction of travel of the aerator and biased to a forward position. Biasing force may be by a variety of spring arrangements. By acting on a variable point on the tine leg the roller exerts a variable return torque in the forward direction, the torque increasing to a maximum as the tine leg reaches the top of its stroke.

The rear-guide roller and the forward travel-limiting stop roller may engage a lower portion of the tine leg whereby the rear-guide roller biases the tine leg towards a position ready for insertion of the tine into the ground and the forward travel-limiting stop roller limits travel of the tine leg in the forward direction.

The biasing may also be effected by way of a resiliently flexibly mounted guide arrangement. The guide arrangement may comprise a roller mounted at the rear of the tine leg. The roller may be rotatably mounted at the end of a roller arm, and a plurality of coil springs may be connected to the roller and/or its arm for drawing the roller into abutment with the tine leg and for exerting a restoring force on the tine leg.

This guide arrangement may also serve to damp rapid horizontal reciprocatory motion of the tine leg when the aerator is rapidly traversing a surface, in use.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of the Drawings

Embodiments of a turf aerator will now be described by way of example with reference to the accompanying drawings in which:
Figure 1 illustrates a perspective view of a first embodiment of the a turf aerator comprising an aerator arranged to be carried by, or towed behind a vehicle provided with a three point hitch;
Figure 2 is a side elevation of the aerator mechanism at its lowest point in a cycle of operation;
Figure 3 (a), (b) and (c) are a series of diagrams showing the motion of a tine leg in a prior art turf aerator;
Figure 4 (a), (b) and (c) are a series of diagrams showing the motion of a tine leg in the present turf aerator by way of comparison with the diagrams of Figure 3;
Figure 5 illustrates a perspective view of a second embodiment of the a turf aerator comprising a self-propelled turf aerator;
Figure 6 illustrates a perspective view of a "ride on" embodiment of a turf aerator;
Figure 7 illustrates a side view of the guide mechanism as shown in Figure 2; and
Figure 8 illustrates a side elevation of the foot mechanism as shown in Figure 2.

### Detailed Description of a Turf Aerator

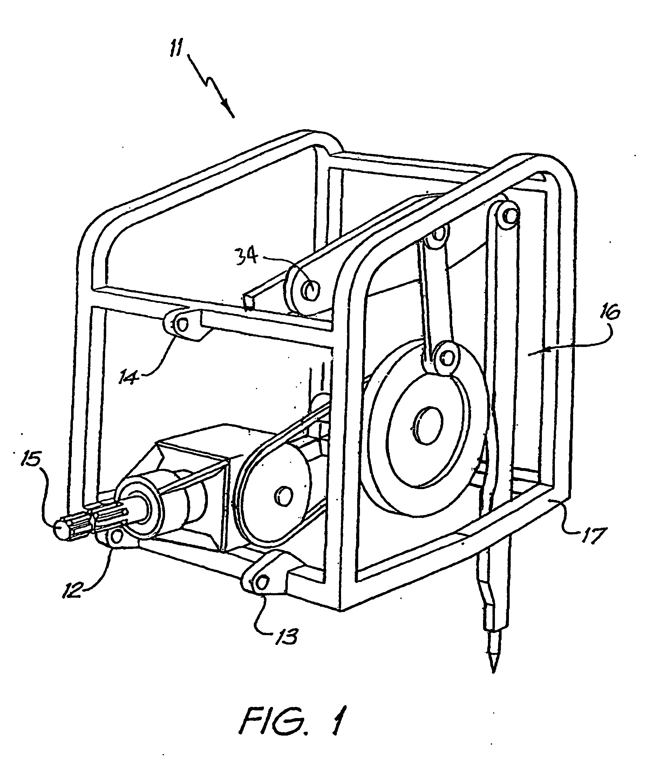

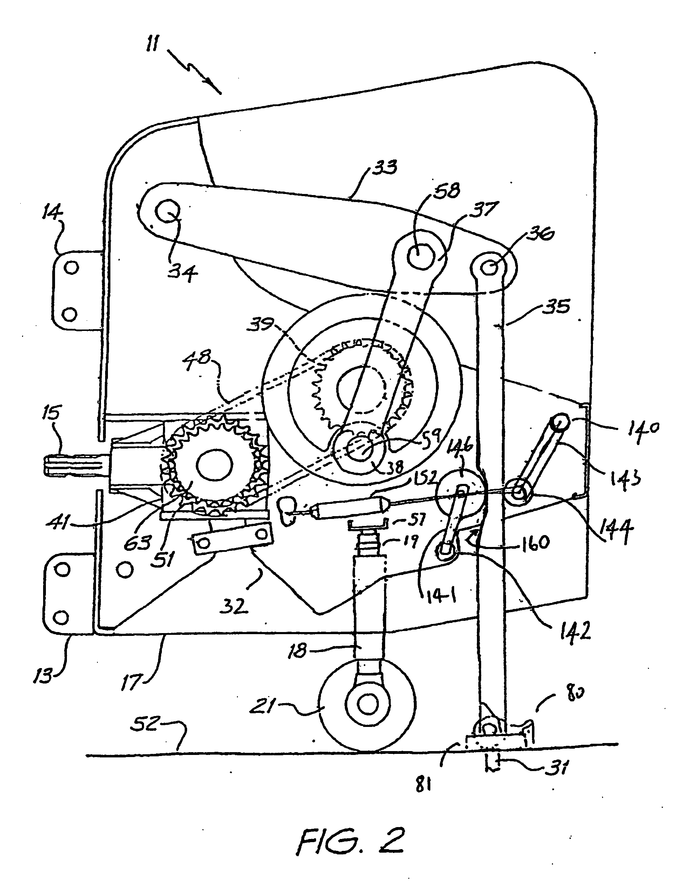

Referring to Figure 1, a first implementation of the turf aerator is illustrated in which an aerator 11 of the type towed behind a tractor or similar vehicle is shown. In this embodiment, mounting points 12, 13, 14 are provided for attachment to the three-point hitch of the towing vehicle and an input shaft 15 is arranged to connect to a power take-off of the towing vehicle. The aerator mechanism 16 is mounted on a chassis 17 and the rear wheels 21 (see Figure 2) are mounted on a ram 18, extending below a bracket 57 on the chassis 17 and connected by resilient connection 19, such that when the towing vehicle raises the three point hitch, the chassis 17 raises but the wheels or a roller 21 connected to the ram 18 may be lowered to remain in contact with the ground to help support the aerator and to vary the tine penetration depth.

Referring to Figure 2, an embodiment of the turf aerator is illustrated wherein the aerator mechanism is shown in detail at a point of its cycle where the aerator tines 31 are fully lowered into the turf surface 52. The mechanism is mounted on a frame 32 extending above the chassis 17 and includes a substantially horizontally extending reciprocating drive member 33 mounted to the frame 32 by a pivotal connection 34, and a substantially vertical tine leg 35 connected at its upper end to the opposite end of the drive member 33 by a pivotal connection 36. The tines 31 are mounted to a platform that forms part of the foot assembly 80 which is mounted to the lower end of the tine leg 35. A push rod 37 extends between a pivotable connection 58 on the drive member 33 and the pivotable connection 59 on a crank 38 to drive the drive member 33 and thereby the tine leg 35 in reciprocating motion. The crank 38 is connected to a coaxial chain wheel 39 which is driven via chains 48, chain wheel 51 and gearbox 41 and power take-off connection 15. An adjustable tensioning means may be provided (not shown) to regulate the movement of the chains 48.

Rotation of the crank 38 causes reciprocation of the drive member 33 via the push rod 37 and subsequently this causes the tine leg 35 to reciprocate substantially vertically. Reciprocation is controlled in synchronisation with forward motion of the aerator such that a uniform pattern of holes is punched in the turf surface 52 as the aerator advances. As the aerator mechanism moves forward with the tines 31 inserted in the ground, the tines moves backward relative to the implement.

After the tines 31 are retracted from the ground, the tine leg 35 is moved forward by a rear-guide mechanism comprising a rear-guide roller 144 carried on an arm 143 mounted to the frame at a pivot point 140 and biased to a forward position by a spring 152. The rear-guide mechanism is located behind the tine leg 35, and acts to push the tine leg 35 forward when it leaves the ground 52 and to continuously and smoothly push it towards the forward extremity of its travel. The rear-guide roller 144 pushes the tine leg 35 forward until the tine leg 35 strikes the front-guide mechanism, which limits forward travel of the tine leg 35 prior to the tines 31 being reinserted into the turf surface 52.

The forward guide mechanism includes a spring arm 141 extending from an attachment point 142 on the frame 32. A forward travel-limiting stop roller 146 is attached to a distal end of the spring arm 141 and abuts the tine leg 35 at least when the tine leg reaches its forward most position. The spring arm 141 is preferably formed as a yoke cut from flat spring steel and the front travel-limiting roller 146 is carried on an axel traversing the open end of the yoke.

Referring to Figures 1, 2, 4, 5 & 6, the tine leg 37 is provided with a cam surface 160 over part of its forward facing surface. When the tine leg is out of ground engagement and is limited in its forward travel by the forward travel limiting stop roller 146, the cam surface 160 engages with the roller 146 during part of the reciprocating motion of the tine leg. This is particularly the case when the aerator mechanism is raised out of ground engagement and the tine leg is biased to run in continuous engagement with the forward travel-limiting stop roller 146. The cam surface 160 has a shape which is complimentary to the path of the pivot point 36 at the upper end of the tine leg (or at least the part of that path from the location at which the pivot point 36 is furthest rearward, relative to the forward direction of travel, to the point at the lower extremity of travel of the pivot point 36), such that as the pivot point 36 passes through the lower portion of its path, the cam 160 compensates for the tendency of the tine 31 to kick in a rearward direction.

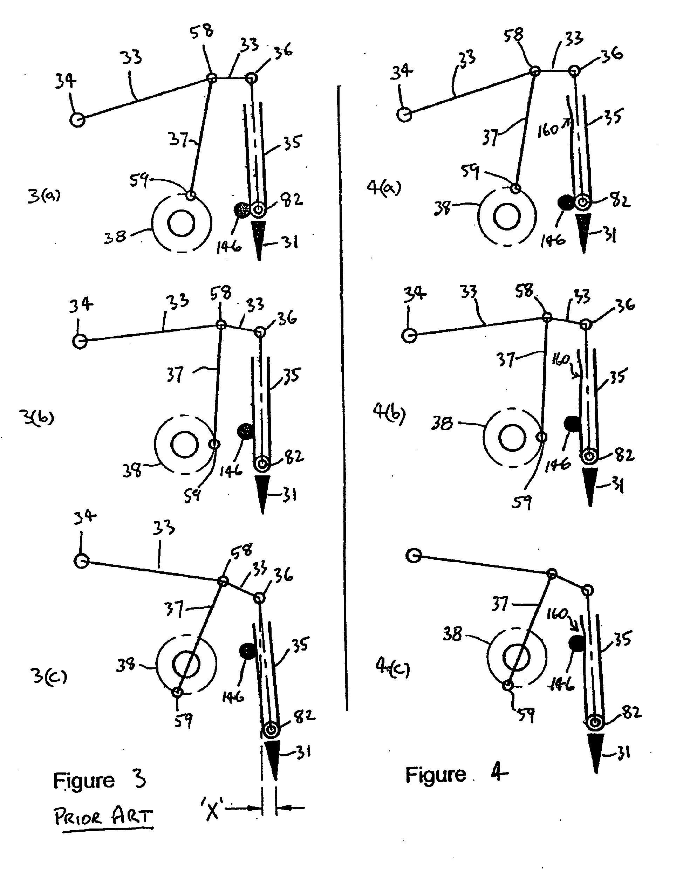

Referring to Figure 3, which shows a prior art arrangement, it will be noted that as the reciprocating drive member 33 moves downward from the position shown in figure 3(a) through the position shown in figure 3(b) to the position shown in figure 3(c) essentially representing the lowest point in the travel of the reciprocating drive member and its associated pivot point 36, the tine moves by a distance 'X' to the right (or rearward relative to the direction of motion of the mechanism). This kicking leads to flailing motion and excessive vibration when the tines are not engaged in the ground. It also leads to surface damage (i.e. tearing) as the tines are inserted into the ground with the mechanism running and produces rocking of the tines in the hole if the mechanism is run while engaging the ground without forward motion. In the worst case this could lead to tine leg damage.

By comparison, referring to figure 4, during the same part of the reciprocation cycle, as seen in Figure 3, the cam surface 160 in figure 4 allows the path of travel of the tine 31 to remain substantially vertical relative to the frame of reference of the chassis (which may be in motion) while the tine leg 35 is running against the forward travel limiting stop roller 146. This reduces flailing and vibration compared to the prior art arrangement (everything else being equal) making it feasible to insert and/or remove the reciprocating mechanism from ground engagement while operating at speed without the tines becoming unstable in their motion. Being able to operate the mechanism at speed while disengaged from the ground allows the operator to lift the mechanism while passing over small obstructions such as cups on putting greens and tee markers on tee-off areas, pop-up sprinkler heads, etc, without having to stop or slow the mechanism. It also allows the mechanism to be brought up to operating speed before dropping the tines into ground engagement at start-up and lessens the chance of accidentally moving forward with the tines engaged in the ground and the reciprocating mechanism not operating (which will lead to tine leg damage).

Because the guide mechanisms, and in particular the rear guide mechanism, operate at variable points on the tine leg, depending upon the point of the operating cycle, the torque applied to move the leg forward as it is removed from the ground increases towards maximum at the top of its stroke. This results in a smooth increase in acceleration as the tine is lifted.

When the aerator 11 is set at its normal operating height, the wheels or roller 21 will be in contact with the ground 52 to help support the aerator (or in self-propelled models, to substantially fully support the aerator). When aeration is not in progress, the jack 18 is extended to raise the chassis 17 sufficiently to lift all of the tines clear of the ground, regardless of their position in the aeration cycle. In the case of the tractor-mounted model of Figures 1 & 2, this would be carried out in conjunction with the raising of the 3-point hitch, connected to the mounting points 12, 13 14. The jack 18 additionally serves as a tine insertion depth adjustment mechanism.

It should be noted that while one tine leg 35 is illustrated for the sake of simplicity, typically 2, 4, or more tine legs and their associated drive mechanisms, as described above, will be provided side by side in the chassis 17. These mechanisms are operated at the same speed (they are driven off one gearbox), but will typically have their operating cycles offset such that the load on the drive components is distributed over the cycle and not subjected to the shock of all tines hitting the ground and being driven in simultaneously. This also reduces the force required to extract the tines from ground engagement and reduces the force created as the tines are driven into hard earth, which causes the chassis of the aerator to be lifted.

In a further embodiment, the rear guide mechanism may be replaced with a rosta tensioner arranged rearwardly of the tine leg 35. The rosta tensioner includes a torsion block, a tensioner arm extending from the torsion block and a roller which abuts the tine leg 35 substantially all of the time. The torsion block is preferably formed of a resilient material and is preferably mounted at one end to the frame 32.

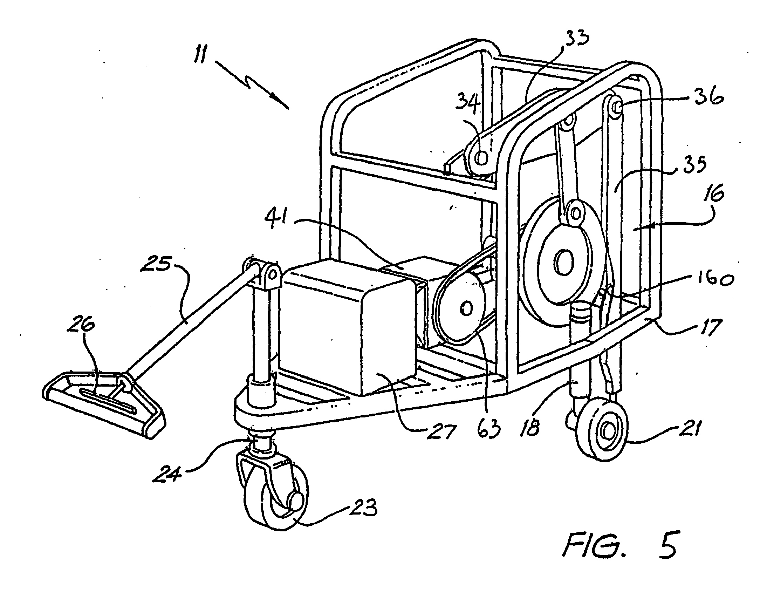

Turning to Figure 5, a self propelled, "walk-behind" version of the aerator is illustrated. In this embodiment, again the aerator mechanism 16 is mounted on a chassis 17 and a ram 18 is resiliently connected to the chassis to carry the wheels or a roller 21. In this embodiment, the front of the implement is supported on a single or double wheel 23 mounted at the lower end of a post 24 rotatably mounted through the forward end of the chassis 17.

A control arm 25 extends from and is pivotally connected to the upper end of the post 24 and includes a plurality of control levers 26 used to operate the implement. A motor 27 is provided to drive the aerator mechanism and to propel the implement via the rear wheels 21.

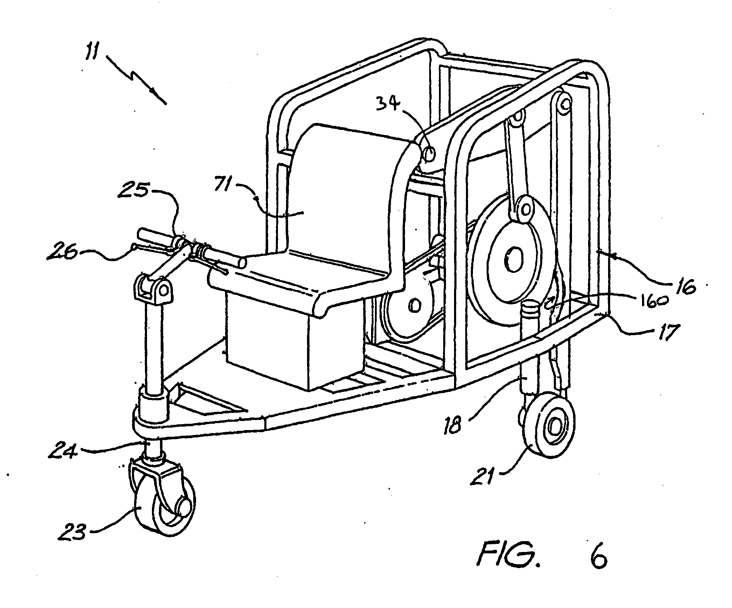

Referring to Figure 6, a "ride on" version of the aerator is illustrated, in which the forward end of the chassis 17 is elongated and an operator's seat 71 is provided behind the operating arm 25.

To avoid problems caused by lubricating oil, all of the pivot points and drive shaft bearings in the mechanisms are manufactured with self lubricating bushes formed of lubrication impregnated nylon and sealed bearings are used wherever required.

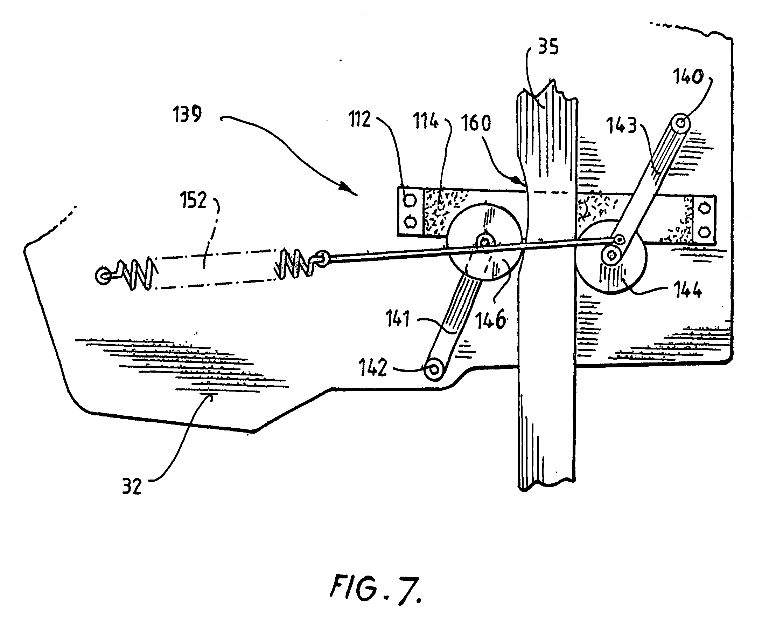

Figure 7 illustrates the guide arrangement 139 as shown in Figure 2. The guide arrangement is provided for guiding the lower end of the tine leg 35 and to ensure the required insertion into, and retraction from, the surface 52 of the green. The guide arrangement comprises a rear guide mechanism and a forward guide mechanism. The rear guide mechanism includes an arm 143, at the first end of which is a pivot 140 which is mounted to the frame 32. At a second end of the arm 143 is a rear-guide roller 144, which abuts the tine leg 35. Attached to the rear-guide roller 144 is a tension spring 152 which pulls the roller 144 forward (i.e. in the direction of travel) and accordingly biases the tine leg forward when not engaged in the ground.

The forward guide mechanism includes a spring arm 141 attached to the frame 32 at a mounting point 142. A forward travel-limiting stop roller 146 is attached to a distal end of the spring arm 141 such that the forward travel-limiting stop roller 146 limits the forward travel of the tine leg 35.

By adjusting the gearing in the gearbox of the aerator, the ground spacing of holes created by the tines 31 can be varied. For very rapid traversal of the turf 52, chatter of the tine legs 35 is inhibited by means of the spring-biased rollers 144 and the forward travel-limiting stop roller 146. The tine legs 35 are also constrained against lateral movement by means of a lined bracket 112 through which the tine leg 35 passes. The bracket 112 is slotted with a plastics lining 114 which is also self lubricating. For example, the lining 114 maybe PTFE.

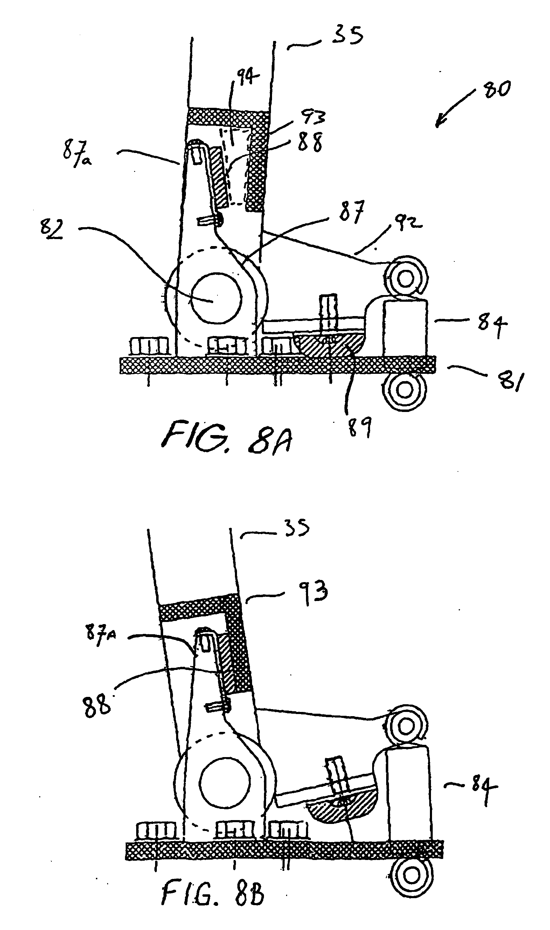

Figures 8A and 8B illustrate the foot assembly 80 as shown in Figure 2. The foot assembly 80 is mounted to the tine leg 35.

Referring to Figure 8A, the foot assembly 80, includes a first mounting member 87, and a second mounting member (not shown) which extend from a platform 81 and a tine leg 35 is pivotably connected between the first mounting member and the second mounting member. Each tine leg is connected to the mounting member by a pin 82.

An arm 92 extends from the tine leg 35. Stopper 89 is mounted on the arm 92 and rests against the platform 81 when the platform 81 is at a first end of its pivotal travel.

A spring 84 is mounted on the platform 81 behind (in the direction of movement of the aerator 11) the tine leg 35. The spring 84 is connected to an extremity of the arm 92.

Figure 8B illustrates the foot assembly 80 when the spring 84 is extended. Second stoppers 88 are attached to a lip 87a of each mounting member. Angle brackets 93 are mounted on the tine leg 35. Second stoppers 88 stop against the angle brackets 93 when the tine leg 35 is at a second end of its pivotal travel.

The pivoting foot assembly 80 of Figures 8A and 8B, which carries the tine 31, is intended to rotate while the tine is in the ground allowing the tine to remain substantially vertical while the tine leg 35 swings through an arc. The foot pivots back to its original position under influence of the spring 84 when the tine leaves the ground.

Under some circumstances, it is desirable to restrict movement of the foot assembly 80 relative to the tine leg 35 such that the tine 31 pivots in the ground. To achieve this an optional wedge shaped block 94 may be clamped between the tine leg 35 and the angle bracket 93 to hold the foot assembly 80 at one end of its travel relative to the tine leg 35.

It will be appreciated by persons skilled in the art that numerous variations and/or modifications may be made to the turf aerator as shown in the specific embodiments without departing from the scope of the invention as defined by the claims. The present embodiments are, therefore, to be considered in all respects as illustrative and not restrictive.

## Claims

1. A turf aerator (11) with a reciprocating drive mechanism comprising:
a substantially rigid tine leg (35) pivotally mounted at an upper end to a drive assembly arranged to reciprocate the tine leg (35) along its longitudinal axis; and
the drive assembly comprising a reciprocating drive member (33) to which the tine leg (35) is pivotally attached at a first point (36) along the drive member (33), the drive member -(33) being pivotally connected at a second point (34) to a frame (32) and at a third point (58) to a first eccentric (37), the first eccentric (37) being rotated to reciprocate the first point (36) on the drive member (33) substantially vertically; and
**characterized in that**,
the tine leg (35) is provided with a cam surface (160) facing the direction in which the aerator (11) travels when in use; and
the turf aerator (11) comprises a forward guide arrangement (139) comprising a forward travel-limiting stop (146) acting on the cam surface of the tine leg (35) to limit forward travel of the tine leg (35) when the tine (31) is out of the ground (52), the cam surface (160) being shaped to compensate for arcuate motion of the first point (36) of the drive member (33) to thereby maintain a substantially straight and axial path of travel of the tine (31) while the tine leg (35) is running against the forward travel-limiting stop (146).

2. The turf aerator (11) as claimed in claim 1 wherein, in use the tine (31) remains substantially vertical and travels in a substantially vertical path while the tine leg (35) is running against the forward travel-limiting stop (146).

3. The turf aerator (11) as claimed in claim 1 or 2 wherein the cam surface (160) has a shape which is a function of an arc of travel of the first point (36) of the drive member (33).

4. The turf aerator (11) as claimed in claim 1, 2 or 3 wherein the forward travel-limiting stop (146) comprises a roller mounted on a spring arm (141) and located forward of the tine leg (35) relative to the normal direction of travel of the aerator (11) to define a forward limit of travel of the tine leg (35).

5. The turf aerator (11) as claimed in claim 4 wherein the spring arm (141) has a high spring rate causing it to be semi-rigid.

6. The turf aerator (11) as claimed in claim 1, 2, 3, 4 or 5 wherein the shape of the cam surface (160) is adjusted to allow for the change in point of contact between the cam surface (160) and the forward travel-limiting stop roller (146) over the length of reciprocation of the tine leg (35).

7. The turf aerator (11) as claimed in claim 1, 2, 3, 4, 5 or 6 wherein the third point (58) of the reciprocating drive member (33) is located intermediate the first (36) and second points (34).

8. The turf aerator (11) as claimed in any one of the preceding claims wherein the lower end of the tine leg (35) is able to move in a rearward direction to allow the tine (31) to move relative to the machine (11) while the tine (31) is in the ground (52).

9. The turf aerator (11) as claimed in any one of the preceding claims wherein the tine leg (35) is biased to a forward position such that when the tine (31) leaves the ground (52), the tine leg (35) returns toward the forward end of its travel ready for re-engagement with the ground (52) and wherein the forward biasing of the tine leg (35) is optionally achieved by a rear guide mechanism including a rear-guide roller (144) mounted on a pivotable arm (143), located rearward of the tine leg (35) relative to the normal direction of travel of the aerator (11) and biased to a forward position.

10. The turf aerator (11) as claimed in claim 9 wherein the rear-guide roller (144) and the forward travel-limiting stop roller (146) engage a lower portion of the tine leg (35) whereby the rear-guide roller (146) biases the tine leg (35) towards a position ready for insertion of the tine (31) into the ground (52) and the forward travel-limiting stop roller (146) limits travel of the tine leg (35) in the forward direction, and optionally the roller (144) mounted at the rear of the tine leg (35) is rotatably mounted at the end of a roller arm (143), and a plurality of coil spring (152) are connected to the roller (144) and/or its arm (143) for drawing the roller (144) into abutment with the tine leg (35) and for exerting a restoring force on the tine leg (35).

11. The turf aerator (11) as claimed in claim 10 wherein biasing of the tine leg (35) towards a position ready for insertion of the tine (31) into the ground (52) is effected by way of a resiliently flexibly mounted guide arrangement (139) and wherein the guide arrangement (139) optionally comprises a roller (144) mounted at the rear of the tine leg (35) and also optionally the guide arrangement (139) serves to damp rapid horizontal reciprocatory motion of the tine leg (35) when the aerator (11) is rapidly traversing a surface, in use.

12. A method of reciprocating a tine in a turf aerator (11) comprising:
providing a substantially rigid tine leg (35) carrying a substantially axially mounted tine (31) at one end, and a cam surface (160) on the tine leg (35) facing the direction in which the aerator (11) travels when in use:
driving the tine leg (35) along its longitudinal axis the tine leg (35) being pivotally mounted, at an end opposite the tine (31), to a drive assembly (33) arranged to reciprocate the tine leg (35);
biasing the tine leg (35) towards a forward travel-limiting stop (146) acting on the cam surface (160) of the tine leg (35) to limit forward travel of the tine leg (35) when the tine (31) is out of the ground (52), the cam surface (160) being shaped to compensate for arcuate motion of the pivotably connected end of the tine leg (31) to thereby maintain a substantially straight and axial path of travel of the tine (31) while the tine leg (35) is running against the forward travel-limiting stop (146).

13. The method as claimed in claim 12 wherein, in use the tine (31) is maintained substantially vertical and travels in a substantially vertical path while the tine leg (35) is running against the forward travel-limiting stop (146) and optionally the cam surface (160) is provided with a shape which is a function of an arc of travel of the first point of the drive member (33).

14. The method as claimed in claim 12, or 13 wherein the cam surface (160) is provided with a shape adjusted to allow for the change in point of contact between the cam surface (160) and the forward travel-limiting stop roller (146) over the length of reciprocation of the tine leg (35).

15. The method as claimed in any one of claims 12 to 14 wherein the lower end of the tine leg (35) is permitted to move in a rearward direction to allow the tine (31) to move relative to the machine (11) while the tine (31) is in the ground (52).

## Patentansprüche

1. Rasen-Aerator (11) mit hin- und hergehendem Antriebsmechanismus, aufweisend:
einen im Wesentlichen starren Zinkenschenkel (35), der schwenkbar bei einem oberen Ende an einer Antriebsbaugruppe montiert ist, die angeordnet ist, um eine Hin- und Herbewegung des Zinkenschenkels (35) entlang seiner Längsachse durchzuführen; und
wobei die Antriebsbaugruppe ein hin- und hergehendes Antriebselement (33) aufweist, an dem der Zinkenschenkel (35) schwenkbar bei einem ersten Punkt (36) entlang des Antriebselementes (33) befestigt ist, wobei das Antriebselement (33) schwenkbar bei einem zweiten Punkt (34) an einem Rahmen (32) und bei einem dritten Punkt (58) an einer ersten Exzentereinrichtung (37) angebracht ist, wobei die erste Exzentereinrichtung (37) rotiert wird, um den ersten Punkt (36) an dem Antriebselement (33) im Wesentlichen in vertikaler Richtung hin- und herzubewegen; und
**dadurch gekennzeichnet, dass**
der Zinkenschenkel (35) mit einer Steuerkurvenfläche (160) versehen ist, die in die Richtung weist, in welcher sich der Aerator (11) bewegt, wenn er im Gebrauch ist; und
der Rasen-Aerator (11) eine vordere Führungsanordnung (139) aufweist, die einen Vorwärtsbewegungsbegrenzungsanschlag (146) beinhaltet, der auf die Steuerkurvenfläche des Zinkenschenkels (35) wirkt, um eine Vorwärtsbewegung des Zinkenschenkels (35) zu begrenzen, wenn sich der Zinken (31) außerhalb des Erdbodens (52) befindet, wobei die Steuerkurvenfläche (160) eine solche Gestalt hat, dass eine bogenförmige Bewegung des ersten Punktes (36) des Antriebselementes (33) kompensiert wird, um dadurch einen im Wesentlichen geradlinigen und axialen Laufweg des Zinkens (31) beizubehalten, und dabei der Zinkenschenkel (35) gegen den Vorwärtsbewegungsbegrenzungsanschlag (146) läuft.

2. Rasen-Aerator (11) nach Anspruch 1, wobei im Gebrauch der Zinken (31) im Wesentlichen vertikal bleibt und auf einem im Wesentlichen vertikalen Weg läuft, wobei dabei der Zinkenschenkel (35) gegen den Vorwärtsbewegungsbegrenzungsanschlag (146) läuft.

3. Rasen-Aerator (11) nach Anspruch 1 oder 2, wobei die Steuerkurvenfläche (160) eine Gestalt hat, die eine Funktion einer Bogenform einer Bewegung des ersten Punktes (36) des Antriebselementes (33) ist.

4. Rasen-Aerator (11) nach Anspruch 1, 2 oder 3, wobei der Vorwärtsbewegungsbegrenzungsanschlag (146) eine Rolle aufweist, die an einem Federarm (141) montiert ist und sich vor dem Zinkenschenkel (35) befindet, und zwar relativ zur normalen Bewegungsrichtung des Aerators (11), um eine vordere Bewegungsgrenze des Zinkenschenkels (35) zu definieren.

5. Rasen-Aerator (11) nach Anspruch 4, wobei der Federarm (141) eine große Federkonstante aufweist, was bewirkt, dass er halbstarr ist.

6. Rasen-Aerator (11) nach Anspruch 1, 2, 3, 4 oder 5, wobei die Gestalt der Steuerkurvenfläche (160) angepasst ist, um die Änderung des Kontaktpunktes zwischen der Steuerkurvenfläche (160) und der Vorwärtsbewegungsbegrenzungs-Anschlagsrolle (146) über die Länge der Hin- und Herbewegung des Zinkenschenkels (35) zu berücksichtigen.

7. Rasen-Aerator (11) nach Anspruch 1, 2, 3, 4, 5 oder 6, wobei der dritte Punkt (58) des hin- und hergehenden Antriebselementes (33) sich zwischen dem ersten (36) und dem zweiten Punkt (34) befindet.

8. Rasen-Aerator (11) nach einem der vorhergehenden Ansprüche, wobei das untere Ende des Zinkenschenkels (35) fähig ist, sich in Rückwärtsrichtung zu bewegen, um zu gestatten, dass sich der Zinken (31) relativ zur Maschine (11) bewegt, während sich der Zinken (31) im Erdboden (52) befindet.

9. Rasen-Aerator (11) nach einem der vorhergehenden Ansprüche, wobei der Zinkenschenkel (35) in eine vordere Position vorgespannt ist, derart, dass, wenn der Zinken (31) den Erdboden (52) verlässt, der Zinkenschenkel (35) in Richtung zum vorderen Ende seiner Bewegung zurückkehrt, bereit für ein erneutes Eingreifen in den Erdboden (52), und wobei das Vorspannen in Richtung nach vorne des Zinkenschenkels (35) optional durch einen hinteren Führungsmechanismus erzielt wird, der eine an einem schwenkbaren Arm (143) montierte hintere Führungsrolle (144) beinhaltet, die sich hinter dem Zinkenschenkel (35) befindet, bezogen auf die normale Bewegungsrichtung des Aerators (11), und in eine vordere Position vorgespannt ist.

10. Rasen-Aerator (11) nach Anspruch 9, wobei die hintere Führungsrolle (144) und die Vorwärtsbewegungsbegrenzungs-Anschlagsrolle (146) mit einem unteren Abschnitt des Zinkenschenkels (35) in Eingriff sind, wodurch die hintere Führungsrolle (146) den Zinkenschenkel (35) in Richtung zu einer Position vorspannt, bei der er bereit für ein Einführen des Zinkens (31) in den Erdboden (52) ist, und die Vorwärtsbewegungsbegrenzungs-Anschlagsrolle (146) eine Bewegung des Zinkenschenkels (35) in Vorwärtsrichtung begrenzt, und optional die Rolle (144), die an der Rückseite des Zinkenschenkels (35) montiert ist, am Ende eines Rollenarms (143) drehbar montiert ist, und eine Mehrzahl von Schraubenfedern (152) mit der Rolle (144) und/oder ihrem Arm (143) verbunden sind, um die Rolle (144) auf Anschlag mit dem Zinkenschenkel (35) zu ziehen und eine Rückstellkraft auf den Zinkenschenkel (35) auszuüben.

11. Rasen-Aerator (11) nach Anspruch 10, wobei ein Vorspannen des Zinkenschenkels (35) in Richtung einer Position, bei der er für ein Einführen des Zinkens (31) in den Erdboden (52) bereit ist, mittels einer federnd flexibel montierten Führungsanordnung (139) bewirkt wird, und wobei die Führungsanordnung (139) optional eine Rolle (144) aufweist, die an der Rückseite des Zinkenschenkels (35) montiert ist und auch optional die Führungsanordnung (139) dazu dient, eine schnelle horizontale Hin- und Herbewegung des Zinkenschenkels (35) zu dämpfen, wenn der Aerator (11) eine Oberfläche schnell überquert, und zwar im Gebrauch.

12. Verfahren zum Hin- und Herbewegen eines Zinkens in einem Rasen-Aerator (11), beinhaltend:
Bereitstellen eines im Wesentlichen starren Zinkenschenkels (35), der einen im Wesentlichen axial montierten Zinken (31) an dem einen Ende trägt, wobei eine Steuerkurvenfläche (160) an dem Zinkenschenkel (35) in die Richtung weist, in welcher der Aerator (11) sich bewegt, wenn er sich in Gebrauch befindet;
Antreiben des Zinkenschenkels (35) entlang seiner Längsachse, wobei der Zinkenschenkel (35), und zwar an einem dem Zinken (31) entgegengesetzten Ende, an einer Antriebsbaugruppe (33) schwenkbar montiert ist, die angeordnet ist, um eine Hin- und Herbewegung des Zinkenschenkels (35) durchzuführen;
Vorspannen des Zinkenschenkels (35) in Richtung zu einem Vorwärtsbewegungsbegrenzungsanschlag (146), der auf die Steuerkurvenfläche (160) des Zinkenschenkels (35) wirkt, um eine Vorwärtsbewegung des Zinkenschenkels (35) zu begrenzen, wenn sich der Zinken (31) außerhalb des Erdbodens (52) befindet, wobei die Steuerkurvenfläche (160) geformt ist, um eine bogenförmige Bewegung des schwenkbar verbundenen Endes des Zinkenschenkels (31) zu kompensieren, um dadurch einen im Wesentlichen geradlinigen und axialen Laufweg des Zinkens (31) beizubehalten, wobei dabei der Zinkenschenkel (35) gegen den Vorwärtsbewegungsbegrenzungsanschlag (146) läuft.

13. Verfahren nach Anspruch 12, wobei im Gebrauch der Zinken (31) im Wesentlichen vertikal bleibt und auf einem im Wesentlichen vertikalen Weg läuft, wobei dabei der Zinkenschenkel (35) gegen den Vorwärtsbewegungsbegrenzungsanschlag (146) läuft, und optional ist die Steuerkurvenfläche (160) mit einer Gestalt versehen, die eine Funktion einer Bogenform einer Bewegung des ersten Punktes des Antriebselementes (33) ist.

14. Verfahren nach Anspruch 12 oder 13, wobei die Steuerkurvenfläche (160) mit einer Gestalt versehen ist, die angepasst ist, um die Änderung des Kontaktpunktes zwischen der Steuerkurvenfläche (160) und der Vorwärtsbewegungsbegrenzungs-Anschlagsrolle (146) über die Länge der Hin- und Herbewegung des Zinkenschenkels (35) zu berücksichtigen.

15. Verfahren nach einem der Ansprüche 12 bis 14, wobei dem unteren Ende des Zinkenschenkels (35) gestattet ist, sich in Rückwärtsrichtung zu bewegen, um zu ermöglichen, dass sich der Zinken (31) relativ zur Maschine (11) bewegt, während sich der Zinken (31) im Erdboden (52) befindet.

## Revendications

1. Aérateur de gazon (11) avec un mécanisme d'entraînement à mouvement alternatif comprenant :
une jambe dentée sensiblement rigide (35) montée de manière pivotante au niveau d'une extrémité supérieure sur un ensemble d'entraînement agencé pour faire effectuer un mouvement alternatif à la jambe dentée (35) le long de son axe longitudinal ; et
l'ensemble d'entraînement comprenant un élément d'entraînement à mouvement alternatif (33) sur lequel la jambe dentée (35) est fixée de manière pivotante au niveau d'un premier point (36) le long de l'élément d'entraînement (33), l'élément d'entraînement (33) étant raccordé de manière pivotante au niveau d'un deuxième point (34) à un châssis (32) et au niveau d'un troisième point (58) à un premier excentrique (37), le premier excentrique (37) étant entraîné en rotation pour faire effectuer un mouvement alternatif au premier point (36) sur l'élément d'entraînement (33) sensiblement verticalement ; et
**caractérisé en ce que** :
la jambe dentée (35) est prévue avec une surface de came (160) faisant face à la direction dans laquelle l'aérateur (11) se déplace lorsqu'il est utilisé ; et
l'aérateur de gazon (11) comprend un agencement de guidage avant (139) comprenant une butée de fin de course avant (146) agissant sur la surface de came de la jambe dentée (35) pour limiter le déplacement vers l'avant de la jambe dentée (35) lorsque la dent (31) est hors du sol (52), la surface de came (160) étant formée pour compenser le mouvement arqué du premier point (36) de l'élément d'entraînement (33) pour maintenir ainsi une trajectoire de déplacement sensiblement droite et axiale de la dent (31) alors que la jambe dentée (35) s'étend contre la butée de fin de course avant (146).

2. Aérateur de gazon (11) selon la revendication 1, dans lequel, à l'usage, la dent (31) reste sensiblement verticale et se déplace dans une trajectoire sensiblement verticale alors que la jambe dentée (35) s'étend contre la butée de fin de course avant (146).

3. Aérateur de gazon (11) selon la revendication 1 ou 2, dans lequel la surface de came (160) a une forme qui dépend d'un arc de déplacement du premier point (36) de l'élément d'entraînement (33).

4. Aérateur de gazon (11) selon la revendication 1, 2 ou 3, dans lequel la butée de fin de course avant (146) comprend un rouleau monté sur un bras de ressort (141) et positionné à l'avant de la jambe dentée (35) par rapport à la direction normale de déplacement de l'aérateur (11) pour définir une limite de déplacement avant de la jambe dentée (35).

5. Aérateur de gazon (11) selon la revendication 4, dans lequel le bras de ressort (141) a une constante de rappel élevée l'amenant à être semi-rigide.

6. Aérateur de gazon (11) selon la revendication 1, 2, 3, 4 ou 5, dans lequel la forme de la surface de came (160) est ajustée pour permettre le changement de point de contact entre la surface de came (160) et le rouleau de butée de fin de course avant (146) sur la longueur du mouvement alternatif de la jambe dentée (35).

7. Aérateur de gazon (11) selon la revendication 1, 2, 3, 4, 5 ou 6, dans lequel le troisième point (58) de l'élément d'entraînement à mouvement alternatif (33) est positionné entre les premier (36) et deuxième points (34).

8. Aérateur de gazon (11) selon l'une quelconque des revendications précédentes, dans lequel l'extrémité inférieure de la jambe dentée (35) peut se déplacer dans une direction vers l'arrière pour permettre à la dent (31) de se déplacer par rapport à la machine (11) alors que la dent (31) est dans le sol (52).

9. Aérateur de gazon (11) selon l'une quelconque des revendications précédentes, dans lequel la jambe dentée (35) est sollicitée dans une position avant de sorte que lorsque la dent (31) quitte le sol (52), la jambe dentée (35) revient vers l'extrémité avant de son déplacement, prête pour la remise en prise avec le sol (52) et dans lequel la sollicitation vers l'avant de la jambe dentée (35) est facultativement obtenue par un mécanisme de guidage arrière comprenant un rouleau de guidage arrière (144) monté sur un bras pivotant (143), positionné à l'arrière de la jambe dentée (35) par rapport à la direction normale de déplacement de l'aérateur (11) et sollicité dans une position avant.

10. Aérateur de gazon (11) selon la revendication 9, dans lequel le rouleau de guidage arrière (144) et le rouleau de butée de fin de course avant (146) mettent en prise une partie inférieure de la jambe dentée (35) moyennant quoi le rouleau de guidage arrière (146) sollicite la jambe dentée (35) vers une position prête pour l'insertion de la dent (31) dans le sol (52) et le rouleau de butée de fin de course avant (146) limite le déplacement de la jambe dentée (35) dans la direction avant, et facultativement le rouleau (144) monté à l'arrière de la jambe dentée (35) est monté de manière rotative à l'extrémité d'un bras de rouleau (143) et une pluralité de ressorts hélicoïdaux (152) sont raccordés au rouleau (144) et/ou à son bras (143) pour entraîner le rouleau (144) en butée avec la jambe dentée (35) et pour exercer une force de rappel sur la jambe dentée (35).

11. Aérateur de gazon (11) selon la revendication 10, dans lequel la sollicitation de la jambe dentée (35) vers une position prête pour l'insertion de la dent (31) dans le sol (52) est effectuée au moyen d'un agencement de guidage (139) monté de manière souple et élastique et dans lequel l'agencement de guidage (139) comprend facultativement un rouleau (144) monté à l'arrière de la jambe dentée (35) et également facultativement l'agencement de guidage (139) sert à amortir le rapide mouvement alternatif horizontal de la jambe dentée (35) lorsque l'aérateur (11) traverse rapidement une surface, à l'usage.

12. Procédé pour faire effectuer un mouvement alternatif à une dent d'un aérateur de gazon (11) comprenant les étapes consistant à :
prévoir une jambe dentée (35) sensiblement rigide supportant une dent (31) montée de manière sensiblement axiale au niveau d'une extrémité, et une surface de came (160) sur la jambe dentée (35) orientée dans la direction dans laquelle l'aérateur (11) se déplace lorsqu'il est utilisé ;
entraîner la jambe dentée (35) le long de son axe longitudinal, la jambe dentée (35) étant montée de manière pivotante, au niveau d'une extrémité opposée à la dent (31), sur un ensemble d'entraînement (33) agencé pour faire effectuer un mouvement alternatif à la jambe dentée (35) ;
solliciter la jambe dentée (35) vers une butée de fin de course avant (146) agissant sur la surface de came (160) de la jambe dentée (35) pour limiter le déplacement vers l'avant de la jambe dentée (35) lorsque la dent (31) est hors du sol (52), la surface de came (160) étant formée pour compenser le mouvement arqué de l'extrémité raccordée de manière pivotante de la jambe dentée (31) afin de maintenir ainsi une trajectoire de déplacement sensiblement droite et axiale de la dent (31) alors que la jambe dentée (35) s'étend contre la butée de fin de course avant (146).

13. Procédé selon la revendication 12, dans lequel, à l'usage, la dent (31) est maintenue sensiblement verticale et se déplace sur une trajectoire sensiblement verticale tandis que la jambe dentée (35) s'étend contre la butée de fin de course avant (146) et facultativement la surface de came (160) est prévue avec une forme qui dépend d'un arc de déplacement du premier point de l'élément d'entraînement (33).

14. Procédé selon la revendication 12 ou 13, dans lequel la surface de came (160) est prévue avec une forme ajustée pour permettre le changement du point de contact entre la surface de came (160) et le rouleau de butée de fin de course avant (146) sur la longueur du mouvement alternatif de la jambe dentée (35).

15. Procédé selon l'une quelconque des revendications 12 à 14, dans lequel l'extrémité inférieure de la jambe dentée (35) est autorisée à se déplacer dans une direction arrière pour permettre à la dent (31) de se déplacer par rapport à la machine (11) alors que la dent (31) est dans le sol (52).
